# NEUE EUROPÄISCHE PATENTSCHRIFT

(11) **EP 1 621 066 B2**
(45) Veröffentlichungstag und Bekanntmachung des Hinweises auf die Entscheidung über den Einspruch: **07.08.2013**
(45) Hinweis auf die Patenterteilung: 20.02.2008
(21) Anmeldenummer: 05014714.9
(22) Anmeldetag: 07.07.2005
(51) Int. Cl.: A01D 75/18, A01F 12/16

(54) **Schutzvorrichtung für landwirtschaftliche Arbeitsmaschinen**
Protecting device for agricultural machines
Dispositif de protection pour machines agricoles

(30) Priorität: 23.07.2004 DE 102004035928
(43) Veröffentlichungstag der Anmeldung: 01.02.2006
(73) Patentinhaber: CLAAS Selbstfahrende Erntemaschinen GmbH, 33428 Harsewinkel (DE)
(72) Erfinder: Brune, Markus, 33428 Marienfeld (DE); Bühlmeier, Robert, 33442 Herzebrock-Clarholz (DE)

(56) Entgegenhaltungen:
- EP-A- 0 073 269
- CH-A5- 689 077
- DE-A1- 3 023 688
- DE-A1- 3 135 992
- DE-A1- 19 620 526
- DE-A1- 19 742 060
- DE-C2- 3 111 906
- DE-C2- 19 850 062
- GB-A- 1 602 475
- US-A- 4 720 962
- US-A- 4 776 154
- US-A- 5 504 428
- US-A1- 2003 172 636
- US-B1- 6 298 641

## Beschreibung

Die Erfindungen betrifft eine Iandwirtschaftliche Arbeitsmaschinen gemäß dem Oberbegriff des Anspruchs 1.

Aus der DE 31 00 045 ist eine Schutzvorrichtung mit einer als Fremdkörpererkennungsvorrichtung ausgeführten Schutzvorrichtung an einem Mähdrescher bekannt geworden. Die akustische Messfühleranordnung besteht aus einem Messfühlerbalken, der quer über die Breite des Bodens des Schrägförderers angeordnet ist und einem akustischen Messwandler, der an dem Messfühlerbalken befestigt ist. Zur Annahme und Weiterleitung des von dem Getreideschneidwerk abgeernteten Erntegutes nimmt der Schrägförderer in seinem Inneren ein von Umlenkrollen geführtes als Kettenförderer ausgeführtes Zugmittel auf. Der im Übergabebereich zwischen dem Getreideschneidwerk und dem Schrägförderer angeordneten Umlenkwalze ist untenseitig im Boden des Schrägförderers die Messfühleranordnung der Schutzvorrichtung zugeordnet. Mittels einer zentralen Steuer- und Auswerteinheit führen die von der Schutzvorrichtung generierten Fremdkörpersignale zur Ansteuerung einer in Gutflussrichtung der Messfühleranordnung nachgeordneten Auswurfeinrichtung. In Abhängigkeit von den sensierten Fremdkörpersignalen gibt die Auswurfeinrichtung eine sich über den gesamten Querschnitt des Schrägförderers erstreckende Austrittsöffnung im Boden des Schrägförderers frei, sodass durch diese Austrittsöffnung der den oder die detektierten Fremdkörper enthaltende Erntegutstrom aus dem Schrägförderer herausgefördert wird.

Nachteilig bei dieser bekannten Schutzvorrichtung ist, dass die Schutzvorrichtung die Steine mit nur einem Sensor detektiert und eine genauere Lage der Fremdkörper nicht ermittelt wird. Um einen Stein aus dem Erntegut auszuschleusen wird die als Falltüre ausgebildete Auswurföffnung betätigt, die sich über die gesamte Breite des Schrägförderers erstreckt, so dass neben dem ermittelten Stein ein beträchtlicher Anteil Erntegut aus dem Schrägförderer austritt. Die Falltüre ist zudem bedingt durch ihre Größe relativ schwer, sodass zum Öffnen und Schließen hohe Betätigungskräfte erforderlich sind. Der Messfühlerbalken kann Steine mehrfach erkennen, da sie nicht unmittelbar nach dem ersten Erkennen ausgeschleust werden, was schließlich dazu führt, das die Falltüre des Schrägförderers für längere Zeit geöffnet bleibt. Zudem führt die Funktionstrennung zwischen Ort des Sensierens der Fremdkörper und Auswurf der Fremdköper zu einer relativ raumgreifenden Konstruktion und birgt zudem den Nachteil, dass bis zum Ort des Fremdkörperauswurfs eine Entmischung stattgefunden haben kann, sodass der Fremdkörper die Auswurfklappe während ihrer Öffnungsphase nicht erreicht und folglich nicht abgeschieden wird.

Die US 5,504,428 A offenbart eine landwirtschaftliche Erntemaschine in Form eines Feldhäckslers, bei dem drei als Metalldetektor ausgebildete Spulen in Form einer Sternschaltung miteinander verbunden sind. Die Spulen erzeugen in Abhängigkeit von Metallteilen Ausgangsspannungssignale, die einer Signalverarbeitungseinheit zugeführt werden. Die Signalverarbeitungseinheit enthält drei Differentialverstärker mit Verstärkungsfaktoren von ungefähr 83. Durch diese werden die Differenzsignale gebildet. Die Ausgangssignale der Differentialverstärker werden durch jeweils einen Hochpassfilter, einen Tiefpassfilter mit einem Verstärkungsfaktor von ungefähr 3, und einen Tiefpassfilter mit einem Verstärkungsfaktor von ungefähr 6,65 weiterverarbeitet. Die Ausgangssignale der Tiefpassfilter werden durch einen Multiplexer empfangen. Ein üblicher Analog-Digital-Umformer verbindet den Multiplexer mit einem üblichen Mikroprozessor. Dieser führt einen Algorithmus aus, bei dem die Ausgangssignale der Signalverarbeitungseinheit eingelesen werden. In nächsten Schritt wird eine Spannungssumme als Summe der absoluten Werte berechnet. Der folgende Schritt führt den Algorithmus zum ersten Schritt zurück, wenn die Spannungssumme nicht größer ist als ein Schwellwert von beispielsweise 0,7 Volt. Wenn die Spannungssumme größer als der Schwellwert ist, dann wird die Abschaltvorrichtung ausgelöst. Nachteilig an einer derartigen Schutzvorrichtung ist es, dass immer absolute Werte der Differenzsignale zusammengezählt und der sich ergebende Summenwert mit einem Grenzwert verglichen werden, um festzustellen, ob ein Metallstück irgendwo längs der Spulenanordnung auftaucht. Die DE 196 20 526 A1 beschreibt einen Metalldetektor zur Erkennung von metallischen Fremdkörpern im Erntegutfluss, der die Ortung des metallischen Fremdkörpers erlaubt.

Der Erfindung liegt daher die Aufgabe zugrunde eine Schutzvorrichtung zu schaffen, die die Nachteile des Standes der Technik vermeidet und insbesondere eine ortsaufgelöste, hochpräzise Fremdkörpererkennung gewährleistet und bei der zugleich der Verlust an Erntegut im Moment der Fremdkörperabscheidung reduziert wird.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass der Fremdkörperdetektor aus mehreren quer zur Fahrtrichtung der landwirtschaftlichen Arbeitsmaschine nebeneinander angeordneten Sensierelementen besteht, wobei die Sensierelemente die Fremdkörper unabhängig voneinander ortsaufgelöst detektieren und die generierten Signale jeweils von einer Steuereinheit mit einem Schwellwert verglichen werden, kann die Lage der Fremdkörper genauer lokalisiert werden. Dies hat insbesondere den Vorteil, dass der Fremdkörper örtlich präziser abgeschieden werden kann, sodass sich der Verlust an Erntegut während des Fremdkörperabscheidevorganges reduziert.

Indem jedes Sensierelement mit wenigstens einem Drucksensor oder wenigstens einem Vibrationssensor in Wirkverbindung steht, kann die auf jedes Sensierelement fremdkörperabhängig wirkende Kraft separat ermittelt werden.

Vorteilhafterweise ist der Drucksensor als Kraftmessdose ausgeführt mit der die von dem Erntegut und/oder dem Fremdkörper auf das Sensierelement ausgeübte Kraft direkt ermittelt werden kann.

Eine besonders kostengünstige Ausführung der Schutzvorrichtung ergibt sich, wenn die Vibrationssensor als an sich bekannter Klopfsensor ausgeführt wird.

Indem das Sensierelement auf wenigstens einem elastischen Feder-Dämpfer-Element gelagert ist, kann das Sensierelement gegenüber dem Gehäuse des Schrägförderers und den benachbarten Sensierelementen entkoppelt werden, so dass der Einfluss von Störsignalen verringert wird.

Dadurch, dass der Sensor in Abhängigkeit von einem auf das Sensierelement ausgeübten Druck und/oder in Abhängigkeit von einer Beschleunigung des Sensierelementes ein Druck- und/oder Beschleunigungssignal generiert, das proportional zum Druck und/oder der Beschleunigung ist, kann die von dem Erntegut und/oder von den Fremdkörpern auf die Sensierelemente ausgeübte Kraft auf konstruktiv einfache Weise ermittelt werden. Dies hat zudem den Vorteil, dass in die Gutschicht eingebettete Fremdkörper durch die Verdichtung der Gutmatte sehr präzise durch Drucksensoren erkennbar sind während bei geringem oder fehlendem Erntegutdurchsatz transportierte Fremdkörper sehr gut durch Beschleunigungssensoren detektierbar sind, da die dämpfenden Eigenschaften der Erntegutschicht dann entfallen.

Indem die von den Sensoren erzeugten fremdkörperabhängigen Signale in einer Steuereinheit mit einem Schwellwert verglichen werden und die Steuereinheit den jeweiligen Sensierelementen zugeordnet Auswurfbefehlsignale generiert, wenn das Signal den Schwellwert überschreitet, kann festgelegt werden, ob die Signale durch Fremdkörper oder das Erntegut ausgelöst werden und Fremdkörper können, abhängig vom Vergleichsergebnis, automatisch ausgeschleust werden.

Wenn der Schwellwert zudem änderbar ist, kann er an maschinen- und erntegutspezifische Parameter wie beispielsweise die Fahrgeschwindigkeit, die Ernteguteigenschaften und an die regional möglicherweise unterschiedlichen Fremdkörperstrukturen angepasst werden. Dies hat insbesondere den Vorteil, dass die Detektierempfindlichkeit auf die Erntegutgeschwindigkeit und die feuchteabhängige Erntegutdichte abgestimmt werden kann, da insbesondere diese beiden Erntegutparameter maßgeblich die Detektiergenauigkeit beeinflussen.

In einer ersten Ausführung der erfindungsgemäßen Schutzvorrichtung ist der Fremdkörperdetektor an einem Eintrittsende eines Schrägförderers an der landwirtschaftlichen Arbeitsmaschine angeordnet. Diese Anordnung der Schutzvorrichtung hat den Vorteil, dass sie beim Wechsel des Schneidwerks an der landwirtschaftlichen Arbeitsmaschine verbleibt, so dass nicht jedes Schneidwerk mit einer separaten Schutzvorrichtung ausgestattet werden muss.

In einer alternativen Ausführung der erfindungsgemäßen Schutzvorrichtung ist der Fremdkörperdetektor in einem einem Mähbalken nachgeordneten Einzugsbereich eines Schneidwerks an diesem angeordnet, so dass die Fremdkörper frühzeitig erkannt werden. Zudem lässt sich mit dieser Schutzvorrichtung genauer bestimmen an welcher Stelle des Feldes der Fremdkörper von dem Schneidwerk aufgenommen wurde.

Der Schrägförderer weist vorteilhafterweise eine Umlenktrommel und einen Boden auf und die Sensierelemente des Fremdkörperdetektors sind wenigstens teilweise unterhalb der Umlenktrommel im Bereich des Bodens angeordnet, so dass das Erntegut und die Fremdkörper von der Umlenktrommel gegen die Sensiereinheiten gedrückt werden. Dies verbessert insbesondere die Detektiergenauigkeit von in die Erntegutmatte eingebetteten kleineren Fremdkörpern.

In einer weiteren vorteilhaften Ausgestaltung der Erfindung weist das Schneidwerk der landwirtschaftlichen Arbeitsmaschine eine Einzugsschnecke und eine Schneidwerksmulde auf und die Sensierelemente des Fremdkörperdetektors sind wenigstens teilweise unterhalb der Einzugsschnecke im Bereich der Schneidwerksmulde am Schneidwerk angeordnet, so dass das Erntegut von der Einzugswalze gegen die Sensiereinheiten gedrückt wird. Neben einer präziseren Detektion von in die Erntegutschicht eingebetteten Fremdkörpern hat dies ebenfalls den Vorteil, dass Fremdkörper frühzeitig erkannt und aus der landwirtschaftlichen Erntemaschine entfernt werden können.

Indem zwischen Umlenktrommel und/oder Einzugschnecke und den Sensierelementen des Fremdkörperdetektors ein verstellbarer Einzugspalt vorhanden ist, kann zudem auf mechanischem Wege voreingestellt werden ab welcher Größe die Fremdkörper von der Schutzeinrichtung erkannt werden sollen. Dadurch, dass das durch den Einzugspalt hindurchtretende Erntegut auf den Querschnitt des Einzugspaltes eingeschnürt und dabei verdichtet wird, kann auch ein vom Erntegut umgebener, unverformbarer Fremdkörper von der Schutzvorrichtung detektiert werden.

Indem der Fremdkörperdetektor ein fremdkörpererkennendes als auch fremdkörperauswerfendes Organ ist, wird der Fremdkörper in dem Augenblick ausgeschleust wird in dem er erkannt wird. Neben einer bauraumsparenden Ausführung des Fremdkörperdetektors hat dies insbesondere den Vorteil, dass Entmischungsvorgänge innerhalb der Gutschicht im Wesentlichen keinen Einfluss auf die Abscheidegenauigkeit des Fremdkörperdetektors haben.

Indem jedes Sensierelement des Fremdkörperdetektors über ein als Kolben-Zylinder-Einheit ausgeführtes Stellglied einzeln automatisch verschwenkt werden kann, wobei das Stellglied mit der Steuereinheit verbunden ist, kann der Anteil des auszuschleusenden Ernteguts quer zur Fahrtrichtung auf den Bereich örtlich begrenzt werden in dem die Fremdkörper detektiert worden sind.

In vorteilhafter Weiterbildung der Erfindung können die Sensierelemente derart verschwenkbar sein, dass sie in allen Positionen außerhalb des Querschnitts des Schrägförderers angeordnet sind, sodass die Bewegung des Erntegutstrom nicht von dem Fremdkörperdetektor behindert wird.

Damit ein detektierter Fremdkörper unmittelbar nach seinem Erkennen von dem Erntegut abgetrennt wird, fährt der Kolben der Kolben-Zylinder-Einheit ein, sobald die Steuereinheit ein Auswurfbefehlssignal an das zugehörige Stellglied übermittelt, wodurch das Sensierelement von einer Detektionsposition in eine Auswurfposition verschwenkt und eine Auswurföffnung freigibt

Eine besonders einfache Steuerung der Bewegung des Sensierelementes ergibt sich, wenn die Kolbenstange der Kolben-Zylinder-Einheit nach Ablauf eines Zeitraums wieder einfährt und das Sensierelement zurück in die Detektinsposition schwenkt.

Weitere vorteilhafte Ausführungen sind Gegenstand weiterer Unteransprüche und werden an Hand eines in mehreren Figuren dargestellten Ausführungsbeispiels beschrieben.
Es zeigen:
- Fig.1: eine Seitenansicht einer als Mähdrescher ausgeführten landwirtschaftlichen Arbeitsmaschine,
- Fig.2: eine Frontansicht auf den erfindungsgemäßen Einzugsbereich des Schrägförderers bei demontiertem Schneidwerk,
- Fig.3: einen vergrößerten Ausschnitt des Einzugsbereiches des Schrägförderers,

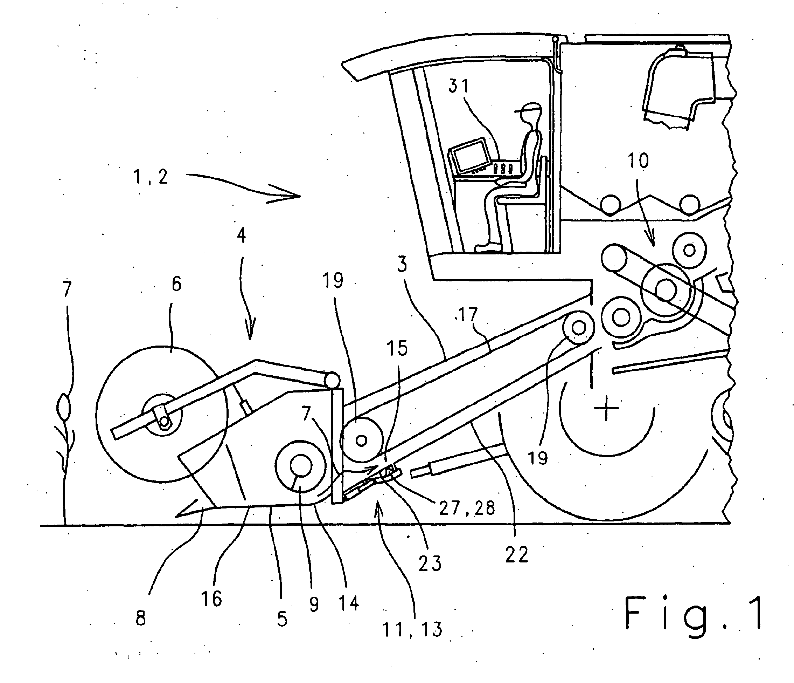

In der Fig. 1 ist eine als selbstfahrender Mähdrescher 1 ausgeführte landwirtschaftliche Arbeitsmaschine 2 in der Seitenansicht dargestellt, an deren Schrägförderer 3 ein Schneidwerk 4 angeordnet ist. Das Schneidwerk 4 besteht aus einem Schneidtisch 5 und einer daran befestigten, rotierenden Haspel 6. Die Haspel 6 sorgt für eine kontinuierliche Annahme des Erntegutes 7 und für eine gleichmäßige Förderung des Erntegutes 7 durch das Schneidwerk 4 hindurch. Das Erntegut 7 wird von einem im vorderen Bereich des Schneidwerks 4 angebrachten Mähbalken 8 abgeschnitten und anschließend mit Hilfe der Haspel 6 zu einer im Schneidtisch 5 angeordneten Einzugschnecke 9 gefördert. Die Einzugschnecke 9 führt das Erntegut dem Schrägförderer 3 zu, der das Erntegut 7 zu einer Dreschvorrichtung 10 weiterleitet. Der Mähdrescher 1 weist eine Schutzvorrichtung 11 auf, die im wesentlichen aus dem erfindungsgemäßen und noch näher zu beschreibenden Fremdkörperdetektor 13 besteht. Mit dem Fremdkörperdetektor 13 werden Fremdkörper, wie beispielsweise Steine oder metallische Gegenstände im Erntegut 7 detektiert. Im dargestellten Ausführungsbeispiel ist der Fremdkörperdetektor 13 im Einzugsbereich 15 des Schrägförderers 3 an dem Mähdrescher 1 angeordnet. Der Schrägförderer 3 wird von einem Gehäuse 18 gebildet, welches in seinem Inneren einen über Umlenktrommeln 19 umlaufenden Kettenförderer 17 aufnimmt. Die erfindungsgemäßen Sensierelemente 23 des Fremdkörperdetektors 13 befinden sich unterhalb der frontseitigen Umlenktrommel 19 im Bereich des den untenseitigen Abschluss des Gehäuses 18 bildenden Bodens 22 des Schrägförderers 3 und sensieren das unterschlächtig geförderte Erntegut 7.

Ebenso ist eine weitere Ausführung der erfindungsgemäßen Schutzvorrichtung möglich, bei der die Sensierelemente 23 des Fremdkörperdetektors 13 in einem dem Mähbalken 8 nachgeordneten Einzugsbereich 16 des Schneidwerks 4 am Schneidwerk 4 angebracht sein können. Bei einer dritten Ausführung der erfindungsgemäßen Schutzvorrichtung 11 können die Sensierelemente 23 des Fremdkörperdetektors 13 unterhalb der Einzugsschnecke 9 in einem Bereich einer Schneidwerksmulde 14 an dem Schneidwerk 4 befestigt sein.

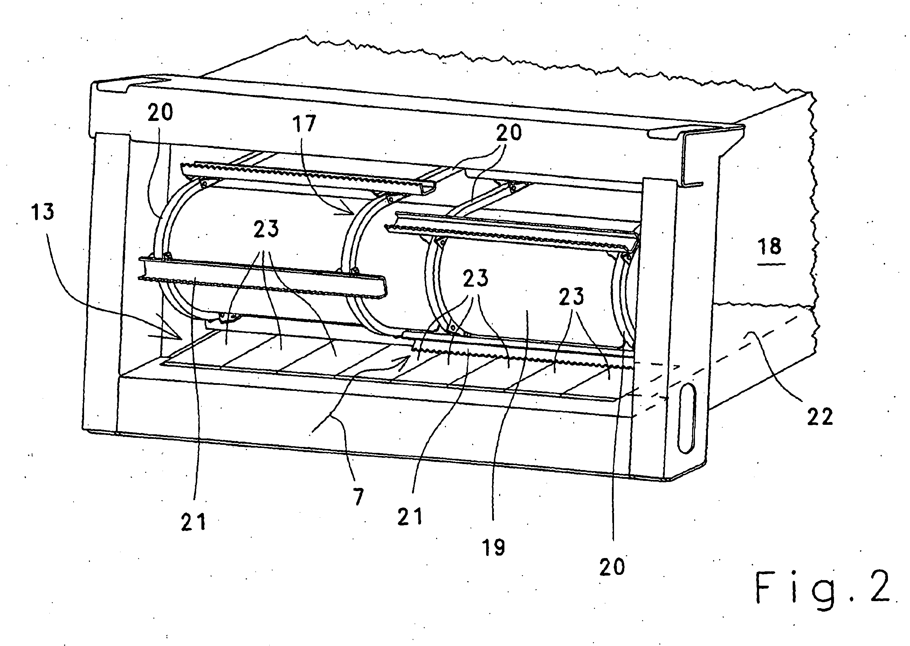

In Fig.2 ist der Schrägförderer 3 bei demontiertem Schneidwerk 4 in der ersten Ausführungsform der Schutzvorrichtung 11 perspektivisch dargestellt. Der Schrägförderer 3 besteht aus einem Kettenförderer 17, der in einem Gehäuse 18 installiert ist. Zu dem Kettenförderer 17 gehört eine gegen den Uhrzeigersinn rotierende Umlenktrommel 19, die am vorderen Ende des Gehäuses 18 gelagert ist und weiterhin eine Anzahl von Förderketten 20, die die Umlenktrommel 19 voneinander beabstandet umschlingen. Die Förderketten 20 sind über Förderleisten 21 miteinander verbunden, die das von dem Schneidwerk (nicht dargestellt) zugeführte Erntegut 7 über den Boden 22 des Gehäuses 18 fördern. Unterhalb der Umlenktrommel 19 befindet sich im Bereich des Bodens 22 des Gehäuses 18 der Fremdkörperdetektor 13, wobei sich der Fremdkörperdetektor 13 über die Breite des Bodens 22 erstreckt. Der Fremdkörperdetektor 13 besteht erfindungsgemäß aus mehreren quer zur Fahrtrichtung der landwirtschaftlichen Arbeitsmaschine 2 nebeneinander angeordneten Sensierelementen 23, die die Fremdkörper im Erntegutstrom 7 unabhängig voneinander ortsaufgelöst detektieren. Das Erntegut 7 wird beim Eintritt in den Schrägförderer 3 mit der Umlenktrommel 19 und den Förderleisten 21 gegen die Sensierelemente 23 gedrückt.

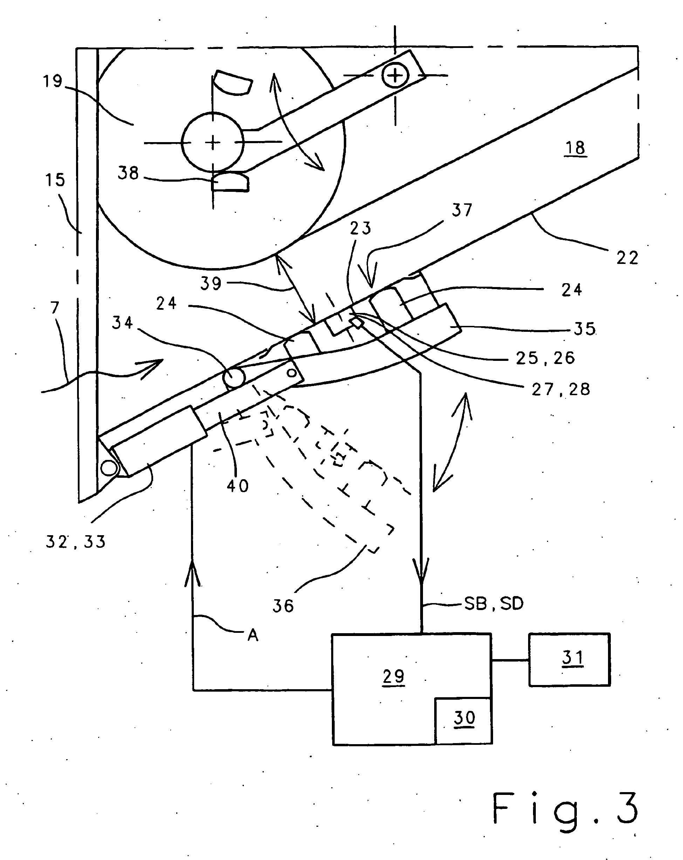

Fig.3 zeigt einen vergrößerten Ausschnitt des Einzugsbereiches 15 des Schrägförderers 3. Die quer zur Gutflussrichtung einander benachbarten Sensierelemente 23 sind auf elastischen Feder-Dämpfer-Elementen 24 gelagert, die ihrerseits am Gehäuse 18 des Schrägförderers 3 um eine Drehachse 34 schwenkbar gelagert sind. Die Lage der Umlenktrommel 19 bezüglich des Gehäuses 18 des Schrägförderers 3 ist über eine Verstell- und Befestigungsvorrichtung 38 quer zur Bewegungsrichtung des Erntegutes 7 veränderbar, so dass ein Einzugsspalt 39 zwischen Umlenktrommel 19 und den Sensierelementen 23 des Fremdkörperdetektors 13 einstellbar ist. Das durch den Einzugspalt 39 hindurchtretende Erntegut 7 wird durch den Einzugspalt 39 eingeschnürt und dabei verdichtet, wodurch auch die von dem Erntegut 7 umhüllten Fremdkörper detektiert werden können. Jedes Sensierelement 23 steht mit jeweils einem als Klopfsensor 25 ausgeführtem Vibrationssensor 26 in Wirkverbindung, der in Abhängigkeit von einer Beschleunigung des Sensierelementes 23 ein Beschleunigungssignal SB erzeugt. Die Beschleunigung des Sensierelementes 23 ist dabei proportional zu einer beispielsweise durch das Erntegut 7 und/oder die Fremdkörper auf das Sensierelement 23 wirkenden Kraft. Es ist möglich, das jedes Sensierelement 23 mit einem als Kraftmessdose 27 ausgeführtem Drucksensor 28 in Wirkverbindung steht, der in Abhängigkeit von einer auf das Sensierelement 23 einwirkenden Kraft ein Drucksignal SD erzeugt.

Weiter sind die jeweiligen Sensoren 25-28 mit einer Steuereinheit 29 verbunden, an die die jeweiligen Druck- oder Beschleunigungssignale SD, SB übermittelt werden. Die Steuereinheit 29 vergleicht die Druck- oder Beschleunigungssignale SD, SB mit einem in der Steuereinheit 29 gespeichertem Schwellwert 30, wobei der Schwellwert 30 jeweils ein Maß für den oder die zu detektierenden Fremdkörper bildet. Die Steuereinheit 29 ist zudem mit einem Bedienfeld 31 verbunden, über das ein Bediener den Schwellwert 30 vorwählen und in der Steuereinheit 29 abspeichern kann. Der Schwellwert 30 kann jedoch auch vom Hersteller in Form von Kennlinien vorgegeben sein, die in der Steuereinheit 29 hinterlegt sind. Die Kennlinien könnten beispielsweise den Schwellwert 30 in Abhängigkeit von der Größe des Einzugspaltes 39, von der Emtegutfeuchte, dem Erntegutdurchsatz oder der Durchzugsgeschwindigkeit festlegen. Für diejenigen Druck- oder Beschleunigungssignale SD, SB, die den Schwellwert 30 überschreiten, generiert die Steuereinheit 29 den jeweiligen Sensierelementen 23 zugeordnete Auswurfbefehle A.

Der Fremdkörperdetektor 13 ist erfindungsgemäß so ausgeführt, dass er gemäß Figur 3 Fremdkörper sowohl erkennen als auch aus dem Schrägförderer 3 auswerfen kann. Hierzu ist jedes Sensierelement 23 einzeln über jeweils ein als Kolben-Zylinder-Einheit 32 ausgeführtes Stellglied 33 um die Drehachse 34 von einer Detektionsposition 35 in eine Auswurfposition 36 und umgekehrt automatisch verschwenkbar, wobei eine Auswurföffnung 37 im Boden 22 des Gehäuses 18 geöffnet und verschlossen wird, durch die die Fremdkörper ausgeschleust werden, Die Lage der Drehachse 34 ist derart gewählt, dass das Sensierelement 23 in jeder Position außerhalb des Durchgangsquerschnittes 39 des Gehäuses 18 des Schrägförderers 3 angeordnet ist. Das Stellglied 33 ist mit der Steuereinheit 29 verbunden. Sobald ein Auswurfbefehl A von der Steuereinheit 29 an das Stellglied 33 übermittelt wird, fährt die Kolbenstange 40 der Kolben-Zylinder-Einheit 32 ein und das zugehörige Sensierelement 23 verschwenkt im Uhrzeigersinn in die Auswurfposition 36. Nach Ablauf eines Zeitraums T fährt der Kolben der Kolben-Zylinder-Einheit 32 wieder aus und das Sensierelement 23 wird entgegen dem Uhrzeigersinn in die Detektionsposition 35 zurückgeschwenkt. Damit der Fremdkörper sicher aus dem Erntegut 7 ausgeschleust wird, könnte das Sensierelement 23, welches den Fremdkörper detektiert hat, immer zusammen mit den zu ihm benachbarten Sensierelementen 23 verschwenkt werden. Wie weit das Sensierelement 23 verschwenkt wird, könnte beispielsweise dadurch geregelt werden, dass der Stellweg der Kolbenstange 40 des Stellgliedes 33 in Abhängigkeit von dem Einzugspalt 39 festgelegt wird.

Es liegt im Rahmen der Erfindung, dass die Sensierelemente 23 des Fremdkörperdetektors 13 auch berührungslos arbeitende Sensierelemente 23 sein können, deren Sensoren zum Beispiel ferromagnetische oder metallische Fremdkörper wie Eisenteile sensieren oder deren Sensoren das Erntegut durchleuchten.

Desweiteren könnte die Steuereinrichtung 29 mit einer Anzeigeeinheit verbunden sein, auf der angezeigt wird, welcher Sensor 25, 26, 27, 28 einen Fremdkörper detektiert, beziehungsweise ob sich das Sensierelement 23 in einer Detektionsposition 35 oder in der Auswurfposition 36 befindet.

Die Steuereinheit 29 kann auch mit einer Schnellstopvorrichtung verbunden sein, die das Schneidwerk 4 und/oder den Schrägförderer 3 und/oder die Dreschvorrichtung 10 abschaltet, sobald die Schutzvorrichtung 11 einen Fremdkörper detektiert, um die Maschinenteile vor Beschädigung zu schützen und um den Fremdkörper entfernen zu können.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Landw. Arbeitsmaschine
- 3: Schrägförderer
- 4: Schneidwerk
- 5: Schneidtisch
- 6: Haspel
- 7: Erntegut
- 8: Mähbalken
- 9: Einzugschnecke
- 10: Dreschvorrichtung
- 11: Schutzvorrichtung
- 13: Fremdkörperdetektor
- 14: Schneidwerksmulde
- 15: Einzugsbereich
- 16: nachgeordneter Einzugsbereich
- 17: Kettenförderer
- 18: Gehäuse
- 19: Umlenktrommel
- 20: Förderketten
- 21: Förderleisten
- 22: Boden
- 23: Sensierelement
- 24: Feder-Dämpfer-Element
- 25: Klopfsensor
- 26: Vibrationssensor
- 27: Kraftmessdose
- 28: Drucksensor
- 29: Steuereinheit
- 30: Schwellwert
- 31: Bedienfeld
- 32: Kolben-Zylinder-Einheit
- 33: Stellglied
- 34: Drehachse
- 35: Detektionsposition
- 36: Auswurfposition
- 37: Auswurföffnung
- 38: Verstell- und Befestigungsvorrichtung
- 39: Einzugspalt
- 40: Kolbenstange

- SD: Drucksignal
- SB: Beschleunigungssignal
- A: Auswurfbefehlsignal

## Patentansprüche

1. Landwirtschaftliche Arbeitsmaschine mit einer Schutzvorrichtung im Einzugsbereich eines Arbeitsorgans, wobei die Schutzvorrichtung einen Fremdkörperdetektor aufweist, mit dem Fremdkörper im Erntegutstrom detektiert werden, wobei der Fremdkörperdetektor (13) aus mehreren quer zur Fahrtrichtung der landwirtschaftlichen Arbeitsmaschine (2) nebeneinander angeordneten Sensierelementen (23) besteht,
wobei
die Sensierelemente (23) die Fremdkörper unabhängig voneinander ortsaufgelöst detektieren und die generierten Signale jeweils von einer Steuereinheit mit einem Schwellwert verglichen werden, **dadurch gekennzeichnet, dass** der Fremdkörperdetektor (13) ein sowohl Fremdkörper erkennendes als auch Fremdkörper auswerfendes Organ ist.

2. Landwirtschaftliche Arbeitsmaschine mit einer Schutzvorrichtung nach Anspruch 1,
**dadurch gekennzeichnet,**
**dass** jedes Sensierelement (23) mit wenigstens einem Drucksensor (28) und/oder zumindest einem Vibrationssensor (26) in Wirkverbindung steht.

3. Landwirtschaftliche Arbeitsmaschine mit einer Schutzvorrichtung nach Anspruch 2,
**dadurch gekennzeichnet,**
**dass** der Drucksensor (28) eine Kraftmessdose (27) ist.

4. Landwirtschaftliche Arbeitsmaschine mit einer Schutzvorrichtung nach Anspruch 2,
**dadurch gekennzeichnet,**
**dass** der Vibrationssensor (26) ein Klopfsensor (25) ist.

5. Landwirtschaftliche Arbeitsmaschine mit einer Schutzvorrichtung nach einem der vorangehenden Ansprüche,
**dadurch gekennzeichnet,**
**dass** das Sensierelement (23) auf wenigstens einem elastischen Feder-Dämpfer-Element (24) gelagert ist.

6. Landwirtschaftliche Arbeitsmaschine mit einer Schutzvorrichtung nach einem der vorangehenden Ansprüche,
**dadurch gekennzeichnet,**
**dass** der Sensor (25, 26, 27, 28) in Abhängigkeit von einem auf das Sensierelement (23) ausgeübten Druck und/oder eine Beschleunigung des Sensierelementes (23) ein Druck- und/oder Beschleunigungssignal (SD, SB), das proportional zu dem Druck und/oder der Beschleunigung ist generiert.

7. Landwirtschaftliche Arbeitsmaschine mit einer Schutzvorrichtung nach einem der vorangehenden Ansprüche,
**dadurch gekennzeichnet,**
**dass** die von den Sensoren (25 ,26) generierten Signale (SB, SD) von einer Steuereinheit (29) mit einem Schwellwert (30) verglichen werden und die Steuereinheit (29) den jeweiligen Sensierelementen (23) zugeordnet Auswurfbefehlsignale (A) generiert, wenn das Druck- und/oder Beschleunigungssignal (SB, SD) den Schwellwert (30) überschreitet.

8. Landwirtschaftliche Arbeitsmaschine mit einer Schutzvorrichtung nach einem der vorangehenden Ansprüche,
**dadurch gekennzeichnet,**
**dass** der Schellwert (30) änderbar ist.

9. Landwirtschaftliche Arbeitsmaschine mit einer Schutzvorrichtung nach einem der vorangehenden Ansprüche,
**dadurch gekennzeichnet,**
**dass** der Fremdkörperdetektor (13) an dem Einzugsbereich (15) eines Schrägförderers (3) an der landwirtschaftlichen Arbeitsmaschine (2) angeordnet ist.

10. Landwirtschaftliche Arbeitsmaschine mit einer Schutzvorrichtung nach einem der vorangehenden Ansprüche,
**dadurch gekennzeichnet,**
**dass** der landwirtschaftlichen Arbeitsmaschine (1, 2) ein einen Mähbalken (8) umfassendes Schneidwerk (4) zugeordnet ist und der Fremdkörperdetektor (13) in einem dem Mähbalken (8) nachgeordneten Einzugsbereich (16) am Schneidwerk (4) angeordnet ist.

11. Landwirtschaftliche Arbeitsmaschine mit einer Schutzvorrichtung nach einem der vorangehenden Ansprüche,
**dadurch gekennzeichnet,**
**dass** der Schrägförderer (3) zumindest eine Umlenktrommel (19) und wenigstens einen Boden (22) aufweist und die Sensierelemente (23) des Fremdkörperdetektors (13) wenigstens teilweise unterhalb der Umlenktrommel (19) im Bereich des Bodens (22) am Schrägförderer (3) angeordnet sind.

12. Landwirtschaftliche Arbeitsmaschine mit einer Schutzvorrichtung nach einem der vorangehenden Ansprüche,
**dadurch gekennzeichnet,**
**dass** das Schneidwerk (4) eine Einzugschnecke (9) und eine Schneidwerksmulde (14) aufweist und die Sensierelemente (23) des Fremdkörperdetektors (13) wenigstens teilweise unterhalb der Einzugsschnecke (9) im Bereich der Schneidwerksmulde (14) am Schneidwerk (4) angeordnet sind.

13. Landwirtschaftliche Arbeitsmaschine mit einer Schutzvorrichtung nach Anspruch 11,
**dadurch gekennzeichnet,**
**dass** zwischen der Umlenktrommel (19) und den Sensierelementen (23) ein verstellbarer Einzugsspalt (39) vorhanden ist.

14. Landwirtschaftliche Arbeitsmaschine mit einer Schutzvorrichtung nach einem der vorangehenden Ansprüche,
**dadurch gekennzeichnet,**
**dass** das durch den Einzugsspalt (39) hindurchtretende Erntegut (7) auf den Querschnitt des Einzugsspaltes (39) eingeschnürt und dabei verdichtet wird.

15. Landwirtschaftliche Arbeitsmaschine mit einer Schutzvorrichtung nach einem der verhengehenden Ansprüche,
**dadurch gekennzeichnet,**
**dass** jedes Sensierelement (23) über ein als Kolben-Zylinder-Einheit (32) ausgeführtes Stellglied (33) verschwenkbar ist und das jeweilige Stellglied (33) mit der Steuereinheit (29) verbunden sind.

16. Landwirtschaftliche Arbeitsmaschine mit einer Schutzvorrichtung nach einem der vorangehenden Ansprüche,
**dadurch gekennzeichnet,**
**dass** die Sensierelemente (23) derart verschwenkbar sind, dass die Sensierelemente (23) in allen Positionen im Wesentlichen außerhalb des Durchgangsspaltes (39) des Schrägförderers (3) angeordnet sind.

17. Landwirtschaftliche Arbeitsmaschine mit einer Schutzvorrichtung nach einem der vorangehenden Ansprüche,
**dadurch gekennzeichnet,**
**dass** die Kolbenstange (40) der Kolben-Zylinder-Einheit (32) einfährt, sobald die Steuereinheit (29) ein Auswurfbefehlssignal (A) an das zugehörige Stellglied (33) übermittelt, wodurch das Sensierelement (23) von einer Detektionsposition (35) in eine Auswurfposition (36) verschwenkt und eine Auswurföffnung (37) freigibt.

18. Landwirtschaftliche Arbeitsmaschine mit einer Schutzvorrichtung nach einem der vorangehenden Ansprüche,
**dadurch gekennzeichnet,**
**dass** die Kolbenstange (40) der Kolben-Zylinder-Einheit (32) nach Ablauf eines Zeitraums (T) wieder einfährt und das Sensierelement (23) zurück in die Detektionsposition (35) schwenkt.

19. Landwirtschaftliche Arbeitsmaschine mit einer Schutzvorrichtung nach einem der vorangehenden Ansprüche,
**dadurch gekennzeichnet,**
**dass** der Fremdkörperdetektor (13) eine Schnellstoppvorrichtung der Arbeitsorgane (3, 4, 10) auslöst.

20. Landwirtschaftliche Arbeitsmaschine mit einer Schutzvorrichtung nach einem der vorangehenden Ansprüche,
**dadurch gekennzeichnet,**
**dass** in der Steuereinheit (29) Kennlinien zur Definition des Schwellwertes (30) hinterlegt sind und dass die Kennlinien maschinenspezifische und erntegutspezifische Parameter berücksichtigen.

## Claims

1. An agricultural working machine having a protective device in the intake region of a working member, wherein the protective device has a foreign body detector with which foreign bodies in the flow of crop material are detected, wherein the foreign body detector (13) comprises a plurality of sensing elements (23) arranged in mutually juxtaposed relationship transversely with respect to the direction of travel of the agricultural working machine (2), wherein the sensing elements (23) detect the foreign bodies independently of each other in positionally resolved relationship and the generated signals are respectively compared to a threshold value by a control unit, **characterised in that** the foreign body detector (13) is a member which both detects foreign bodies and also ejects foreign bodies.

2. An agricultural working machine having a protective device according to claim 1 **characterised in that** each sensing element (23) is operatively connected to at least one pressure sensor (28) and/or at least one vibration sensor (26).

3. An agricultural working machine having a protective device according to claim 2 **characterised in that** the pressure sensor (28) is a force measuring cell (27).

4. An agricultural working machine having a protective device according to claim 2 **characterised in that** the vibration sensor (26) is a knocking sensor (25).

5. An agricultural working machine having a protective device according to one of the preceding claims **characterised in that** the sensing element (23) is supported on at least one elastic spring-damper element (24).

6. An agricultural working machine having a protective device according to one of the preceding claims **characterised in that** in dependence on a pressure exerted on the sensing element (23) and/or an acceleration of the sensing element (23) the sensor (25, 26, 27, 28) generates a pressure and/or acceleration signal (SD, SB) which is proportional to the pressure and/or the acceleration.

7. An agricultural working machine having a protective device according to one of the preceding claims **characterised in that** the signals (SB, SD) generated by the sensors (25, 16) are compared to a threshold value (30) by a control unit (29) and the control unit (29) generates ejection command signals (A) associated with the respective sensing elements (23) when the pressure and/or acceleration signal (SB, SD) exceeds the threshold value (30).

8. An agricultural working machine having a protective device according to one of the preceding claims **characterised in that** the threshold value (30) is changeable.

9. An agricultural working machine having a protective device according to one of the preceding claims **characterised in that** the foreign body detector (13) is arranged at the intake region (15) of an inclined conveyor (3) on the agricultural working machine (2).

10. An agricultural working machine having a protective device according to one of the preceding claims **characterised in that** a cutting mechanism (4) including a mowing bar (8) is associated with the agricultural working machine (1, 2) and the foreign body detector (13) is arranged in an intake region (16) disposed downstream of the mowing bar (8) on the cutting mechanism (4).

11. An agricultural working machine having a protective device according to one of the preceding claims **characterised in that** the inclined conveyor (3) has at least one deflection drum (19) and at least one bottom member (22) and the sensor elements (23) of the foreign body detector (13) are arranged at least partially beneath the deflection drum (19) in the region of the bottom member (22) at the inclined conveyor (3).

12. An agricultural working machine having a protective device according to one of the preceding claims **characterised in that** the cutting mechanism (4) has an intake auger (9) and a cutting mechanism tray (14) and the sensing elements (23) of the foreign body detector (13) are at least partially arranged beneath the intake auger (9) in the region of the cutting mechanism tray (14) at the cutting mechanism (4).

13. An agricultural working machine having a protective device according to claim 11 **characterised in that** an adjustable intake gap (39) is present between the deflection drum (19) and the sensing elements (23).

14. An agricultural working machine having a protective device according to one of the preceding claims **characterised in that** the crop material (7) passing through the intake gap (39) is constricted to the cross-section of the intake gap (39) and is compacted when that happens.

15. An agricultural working machine having a protective device according to one of the preceding claims **characterised in that** each sensing element (23) is pivotable by way of a control member (33) in the form of a piston-cylinder unit (32) and the respective control members (33) are connected to the control unit (29).

16. An agricultural working machine having a protective device according to one of the preceding claims **characterised in that** the sensing elements (23) are pivotable in such a way that in all positions the sensing elements (23) are arranged substantially outside the passage gap (39) of the inclined conveyor (3).

17. An agricultural working machine having a protective device according to one of the preceding claims **characterised in that** the piston rod (40) of the piston-cylinder unit (32) retracts as soon as the control unit (29) sends an ejection command signal (A) to the associated control member (33), whereby the sensing element (23) pivots from a detection position (35) into an ejection position (36) and opens an ejection opening (37).

18. An agricultural working machine having a protective device according to one of the preceding claims **characterised in that** the piston rod (40) of the piston-cylinder unit (32) retracts again after the expiry of a time interval (T) and pivots the sensing element (23) back into the detector position (35).

19. An agricultural working machine having a protective device according to one of the preceding claims **characterised in that** the foreign body detector (13) triggers a quick-action stop device for the working members (3, 4, 10).

20. An agricultural working machine having a protective device according to one of the preceding claims **characterised in that** characteristic curves for defining the threshold value (30) are stored in the control unit (29) and the characteristic curves take account of machine-specific and crop material-specific parameters.

## Revendications

1. Machine de travail agricole avec un dispositif de protection dans la zone d'alimentation d'un organe de travail, lequel dispositif de protection comporte un détecteur de corps étrangers qui permet de détecter des corps étrangers dans le flux de produit de récolte, le détecteur de corps étrangers (13) étant composé de plusieurs éléments détecteurs (23) disposés les uns à côté des autres transversalement à la direction de marche de la machine de travail agricole (2), les éléments détecteurs (23) détectant les corps étrangers, avec résolution spatiale, indépendamment les uns des autres, et les signaux générés étant comparés chacun à une valeur seuil par une unité de commande, **caractérisée en ce que** le détecteur de corps étrangers (13) est à la fois un organe qui détecte les corps étrangers et un organe qui éjecte les corps étrangers.

2. Machine de travail agricole avec un dispositif de protection selon la revendication 1, **caractérisée en ce que** chaque élément détecteur (23) coopère avec au moins un capteur de pression (28) et/ou au moins un capteur de vibrations (26).

3. Machine de travail agricole avec un dispositif de protection selon la revendication 2, **caractérisée en ce que** le capteur de pression (28) est une cellule dynamométrique (27).

4. Machine de travail agricole avec un dispositif de protection selon la revendication 2, **caractérisée en ce que** le capteur de vibrations (26) est un capteur de cognement (25).

5. Machine de travail agricole avec un dispositif de protection selon une des revendications précédentes, **caractérisée en ce que** l'élément détecteur (23) est monté sur au moins un élément élastique à ressort et amortisseur (24).

6. Machine de travail agricole avec un dispositif de protection selon une des revendications précédentes, **caractérisée en ce que**, en fonction d'une pression exercée sur l'élément détecteur (23) et/ou d'une accélération de l'élément détecteur (23), le capteur (25, 26, 27, 28) génère un signal de pression et/ou d'accélération (SD, SB) qui est proportionnel à la pression et/ou à l'accélération.

7. Machine de travail agricole avec un dispositif de protection selon une des revendications précédentes, **caractérisée en ce que** les signaux (SB, SD) générés par les capteurs (25, 26) sont comparés à une valeur seuil (30) par une unité de commande (29), et l'unité de commande (29) génère des signaux d'ordre d'éjection (A) associés aux éléments détecteurs (23) respectifs lorsque le signal de pression et/ou d'accélération (SB, SD) dépasse la valeur seuil (30).

8. Machine de travail agricole avec un dispositif de protection selon une des revendications précédentes, **caractérisée en ce que** la valeur seuil (30) est modifiable.

9. Machine de travail agricole avec un dispositif de protection selon une des revendications précédentes, **caractérisée en ce que** le détecteur de corps étrangers (13) est disposé sur la zone d'alimentation (15) d'un convoyeur incliné (3) sur la machine de travail agricole (2).

10. Machine de travail agricole avec un dispositif de protection selon une des revendications précédentes, **caractérisée en ce qu'**un tablier de coupe (4) comprenant une barre de coupe (8) est associé à la machine de travail agricole (1, 2), et le détecteur de corps étrangers (13) est disposé dans une zone d'alimentation (16) placée à la suite de la barre de coupe (8) sur le tablier de coupe (4).

11. Machine de travail agricole avec un dispositif de protection selon une des revendications précédentes, **caractérisée en ce que** le convoyeur incliné (3) comporte au moins un tambour de renvoi (19) et au moins un fond (22), et les éléments détecteurs (23) du détecteur de corps étrangers (13) sont disposés au moins en partie sous le tambour de renvoi (19) dans la zone du fond (22) sur le convoyeur incliné (3).

12. Machine de travail agricole avec un dispositif de protection selon une des revendications précédentes, **caractérisée en ce que** le tablier de coupe (4) comporte une vis sans fin d'alimentation (9) et un auget de tablier de coupe (14), et les éléments détecteurs (23) du détecteur de corps étrangers (13) sont disposés au moins en partie sous la vis sans fin d'alimentation (9) dans la zone de l'auget de tablier de coupe (14) sur le tablier de coupe (4).

13. Machine de travail agricole avec un dispositif de protection selon la revendication 11, **caractérisée en ce qu'**une fente d'alimentation (39) réglable est présente entre le tambour de renvoi (19) et les éléments détecteurs (23).

14. Machine de travail agricole avec un dispositif de protection selon une des revendications précédentes, **caractérisée en ce que** le produit de récolte (7) qui passe à travers la fente d'alimentation (39) est resserré pour posséder la section transversale de la fente d'alimentation (39) et ce faisant comprimé.

15. Machine de travail agricole avec un dispositif de protection selon une des revendications précédentes, **caractérisée en ce que** chaque élément détecteur (23) peut pivoter sous l'action d'un organe de réglage (33) réalisé sous la forme d'une unité à piston et cylindre (32), et l'organe de réglage (33) respectif est relié à l'unité de commande (29).

16. Machine de travail agricole avec un dispositif de protection selon une des revendications précédentes, **caractérisée en ce que** les éléments détecteurs (23) peuvent pivoter de façon que, dans toutes les positions, les éléments détecteurs (23) soient disposés sensiblement à l'extérieur de la fente de passage (39) du convoyeur incliné (3).

17. Machine de travail agricole avec un dispositif de protection selon une des revendications précédentes, **caractérisée en ce que** la tige de piston (40) de l'unité à piston et cylindre (32) rentre dès que l'unité de commande (29) transmet un signal d'ordre d'éjection (A) à l'organe de réglage (33) associé, de sorte que l'élément détecteur (23) pivote d'une position de détection (35) vers une position d'éjection (36) et libère une ouverture d'éjection (37).

18. Machine de travail agricole avec un dispositif de protection selon une des revendications précédentes, **caractérisée en ce que** la tige de piston (40) de l'unité à piston et cylindre (32) rentre de nouveau après écoulement d'un laps de temps (T), et l'élément détecteur (23) revient dans la position de détection (35).

19. Machine de travail agricole avec un dispositif de protection selon une des revendications précédentes, **caractérisée en ce que** le détecteur de corps étrangers (13) déclenche un dispositif d'arrêt immédiat des organes de travail (3, 4, 10).

20. Machine de travail agricole avec un dispositif de protection selon une des revendications précédentes, **caractérisée en ce que** des courbes caractéristiques de définition de la valeur seuil (30) sont enregistrées dans l'unité de commande (29), et **en ce que** les courbes caractéristiques tiennent compte de paramètres spécifiques à la machine et au produit de récolte.
